(19) Europäisches Patentamt
European Patent Office
Office européen des brevets

(11) **EP 2 939 576 B1**

(12) **FASCICULE DE BREVET EUROPEEN**

(45) Date de publication et mention
de la délivrance du brevet:
**28.11.2018 Bulletin 2018/48**

(51) Int Cl.:
***A47J 31/32*** *(2006.01)*      ***A47J 31/54*** *(2006.01)*

(21) Numéro de dépôt: **15165440.7**

(22) Date de dépôt: **28.04.2015**

(54) **APPAREIL DE CONFECTION D'INFUSIONS**

GERÄT ZUR HERSTELLUNG VON AUFGUSSGETRÄNKEN

APPARATUS FOR BREWING INFUSIONS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.04.2014 FR 1453966**

(43) Date de publication de la demande:
**04.11.2015 Bulletin 2015/45**

(73) Titulaire: **Handpresso
77210 Avon (FR)**

(72) Inventeurs:
• **Enjolras, Marine
30100 ALES (FR)**
• **Pillard, Romain
77590 CHARTRETTES (FR)**

(74) Mandataire: **Duflos, Bertrand Guillaume et al
Cabinet Beau de Loménie
158, rue de l'Université
75340 Paris Cedex 07 (FR)**

(56) Documents cités:
EP-A1- 2 027 798      WO-A1-2005/060800
US-A1- 2008 072 766

**Description**

L'invention concerne un appareil de confection d'infusions comportant un réservoir, un emplacement pour dose de mouture pour infusion dans lequel une dose de mouture pour infusion peut être placée, et un compresseur d'air électrique apte à mettre le réservoir sous pression de manière à permettre la confection de l'infusion lorsqu'un liquide contenu dans le réservoir traverse la dose de mouture et sort du réservoir sous l'effet de la pression.

Un tel appareil est divulgué par exemple par le brevet français FR2966335 au nom de la Demanderesse.

D'autres types d'appareils de confection d'infusions sont par ailleurs proposés par les documents WO2005/060800 et EP 2 027 798.

L'invention vise notamment, mais pas uniquement des appareils de confection d'infusion pouvant être utilisés lors de déplacements. Ces appareils peuvent alors comporter notamment un compresseur d'air alimenté en basse tension, et notamment sous une tension de 12 volts. Comme cette tension est fournie par la batterie de la plupart des moyens de transports, de tels appareils sont donc particulièrement adaptés à la préparation d'infusions ou de café lors de déplacements en voiture ou autre.

Il est relativement difficile, lors de la préparation d'infusions, par exemple de café, d'obtenir systématiquement à la fois une pleine libération des arômes contenus dans la dose de mouture, et la formation d'une mousse, ou d'une crème au-dessus de l'infusion obtenue.

Il est apparu que les machines de préparation d'infusion à compresseur d'air électrique ne permettent pas dans toutes les circonstances de confectionner une infusion ayant toutes les propriétés souhaitées telles qu'indiquées ci-dessus.

Un objectif de l'invention est de remédier à cette carence et de proposer un appareil de confection d'infusion tel que décrit par la revendication 1, permettant de manière fiable de confectionner une infusion ayant les propriétés souhaitées quant à leur arôme et à la présence de mousse ou de crème.

Cet objectif est atteint grâce au fait que le compresseur a un débit de sortie proportionnel à sa tension d'alimentation, et que l'appareil comporte en outre un régulateur de tension, apte à adapter une tension d'alimentation de l'appareil de manière à alimenter le compresseur d'air sous une tension incluse dans une plage prédéterminée.

Il est apparu en effet que la qualité de l'infusion produite, notamment lorsqu'il s'agit de café, dépend étroitement de la pression appliquée dans le réservoir lors de la confection de l'infusion.

Or, cette pression dépend de deux facteurs : le débit d'air entrant dans le réservoir, dans lequel il est refoulé par le compresseur d'air ; et le débit du liquide contenu dans le réservoir, généralement de l'eau, sortant du réservoir à travers la dose de mouture.

Il faut donc un équilibre entre ces deux flux.

Le liquide est mis sous pression par le débit d'air entrant dans le réservoir. Le débit de liquide sortant du réservoir traverse la dose de mouture en empruntant le passage de sortie de liquide prévu pour faire sortir le liquide sous pression depuis le réservoir jusqu'à l'extérieur de la machine à café.

Le débit de liquide à travers la dose de mouture dépend principalement de la dose de mouture. La perte de charge à travers cette dose dépend du fabricant de la dose, et du type de dose considéré ; la valeur de cette perte de charge est donc indépendante de l'appareil de confection d'infusions.

Par suite, lors de la conception d'un appareil de confection d'infusions, les paramètres sur lesquels on intervient pour assurer que la pression dans le réservoir a la valeur souhaitée sont la perte de charge à travers le passage de sortie de liquide et le débit d'air entrant dans le réservoir. Ces deux éléments sont dimensionnés simultanément : le passage de sortie est conçu de telle manière que, lorsque le réservoir est alimenté par un débit d'air entrant nominal sensiblement constant, la perte de charge du liquide à travers ce passage, combinée à la perte de charge à travers la dose de mouture utilisée, maintient la pression dans le réservoir de l'appareil dans la plage de valeurs souhaitées pour la confection de l'infusion.

La perte de charge dans le passage de sortie du liquide et le débit du compresseur d'air peuvent également être dimensionnés de telle sorte que la confection de l'infusion dure la durée souhaitée, et ne soit ni trop rapide ni trop lente. On obtient ainsi une libération optimale des arômes contenus dans la dose de mouture et, dans le cas du café notamment, la formation d'une belle mousse ou crème.

Selon l'invention, le débit d'air entrant est régulé de la manière suivante : on utilise un compresseur d'air électrique dont le débit de sortie est proportionnel à sa tension d'alimentation. Il suffit donc de réguler ou adapter la tension d'alimentation du compresseur pour obtenir un débit d'air refoulé constant.

Dans ce but, l'appareil comporte en outre un régulateur de tension, qui régule ou adapte la tension d'alimentation de l'appareil de manière à alimenter le compresseur d'air sous une tension incluse dans une plage prédéterminée. Le régulateur de tension prend donc comme entrée la tension d'alimentation de l'appareil et renvoie en sortie la tension d'alimentation du compresseur d'air. La plage prédéterminée est fixée de manière à maintenir, pendant la durée de préparation d'une infusion, un débit d'air entrant à peu près égal au débit d'eau sortant, et de telle sorte que la pression dans le réservoir reste dans la plage de valeurs souhaitée pour la confection de l'infusion.

De cette façon, la qualité de l'infusion confectionnée est contrôlée avec précision, y compris lorsque l'appareil est alimenté avec une tension d'alimentation fluctuant dans le temps.

Ainsi de préférence, le régulateur de tension est apte à adapter la tension d'alimentation de l'appareil de manière à alimenter le compresseur d'air sous la tension incluse dans une plage prédéterminée même si la tension d'alimentation de l'appareil fluctue dans le temps.

Cette disposition est particulièrement importante pour les appareils de confection d'infusion alimentés par des batteries de véhicules automobiles, dont la tension de sortie (qui constitue donc la tension d'alimentation de l'appareil de confection d'infusion) varie de manière habituelle entre 9,8 V et 14 V. Elle peut être mise en oeuvre également avec d'autres types de batteries, par exemple des batteries dont la tension de sortie est environ égale à 24 V.

Dans un mode de réalisation, le régulateur de tension est agencé pour n'alimenter le compresseur d'air que lorsque la tension d'alimentation de l'appareil est supérieure à une valeur minimale prédéterminée.

Un tel mode de réalisation présente un double avantage. D'une part, la confection d'une infusion de qualité nécessite que la pression d'eau à laquelle est soumise la dose de mouture soit supérieure à une valeur minimale, donc une tension d'alimentation du compresseur d'air supérieure à une valeur minimale. La valeur minimale prédéterminée est prévue pour être supérieure à cette tension, assurant ainsi la qualité de l'infusion produite en toutes circonstances.

De plus, certaines sources d'alimentation électrique, telles que les batteries, délivrent une tension qui diminue au fur et à mesure que leur degré de charge diminue. Le fait de s'assurer que la tension d'alimentation de l'appareil est supérieure à une valeur minimale prédéterminée garantit que la source d'alimentation possèdera assez d'énergie pour faire fonctionner le compresseur d'air pendant l'infusion complète de la dose de mouture. Eventuellement, la valeur minimale prédéterminée peut être dimensionnée de sorte qu'après avoir confectionné une infusion, il reste suffisamment d'énergie dans la batterie pour une utilisation d'un autre type. Cette précaution est particulièrement utile si l'on cherche à ne pas vider la batterie d'une voiture.

Dans un mode de réalisation, le compresseur d'air est prévu pour fonctionner sous une tension d'alimentation continue.

La tension d'alimentation peut être notamment une tension de l'ordre de 10 Volts, plus particulièrement comprise dans une plage de 10 à 12 Volts. Une telle plage de tension est facilement disponible et utilisée dans la plupart des moyens de transport (voitures, bateaux, avions, motos, camions, etc.).

Dans un mode de réalisation, l'appareil de confection d'infusions comporte en outre un réchauffeur électrique, alimenté directement sous la tension d'alimentation de l'appareil sans adaptation de tension par le régulateur de tension. Ainsi, le réchauffeur électrique utilise toute la puissance disponible. L'absence d'adaptation de la tension du réchauffeur permet de diminuer le temps de chauffage, donc le temps total de confection de l'infusion.

Le réchauffeur est notamment agencé pour permettre de porter la totalité du liquide contenu dans le réservoir à la température de préparation d'infusion. Une fois cette température atteinte, la pression appliquée à ce liquide est augmentée (par le compresseur d'air) afin que le liquide traverse la dose de mouture et permette la confection de l'infusion.

Dans un mode de réalisation, la plage prédéterminée est incluse dans l'intervalle 9,5 V à 10,5 V. Une telle plage de tensions d'alimentation du compresseur d'air garantit un débit d'entrée d'air dans le réservoir permettant la production d'une infusion de bonne qualité.

Dans un mode de réalisation, l'appareil de confection d'infusions comporte en outre une valve commandable de mise à l'air libre. La valve commandable peut être reliée au réservoir. Une telle valve permet notamment de diminuer la pression dans le réservoir après sa mise sous pression.

Dans un mode de réalisation, le compresseur est prévu pour que, au moins à un instant pendant la confection d'au moins une infusion, la pression s'exerçant dans le réservoir soit supérieure ou égale à 6 Bars. De préférence, le compresseur peut être prévu pour que la pression s'exerçant dans le réservoir reste supérieure ou égale à 6 Bars pendant toute la confection de l'infusion. Une telle pression est avantageuse pour la confection de certains types d'infusions, notamment du café conditionné en capsules rigides.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- la figure 1 est une vue schématique d'un appareil de confection d'infusions dans un mode de réalisation de l'invention, muni de sa tête d'infusion, pendant une phase d'infusion ;
- la figure 2 est un schéma électrique de principe représentant le circuit d'alimentation du compresseur d'air de l'appareil de la figure 1.

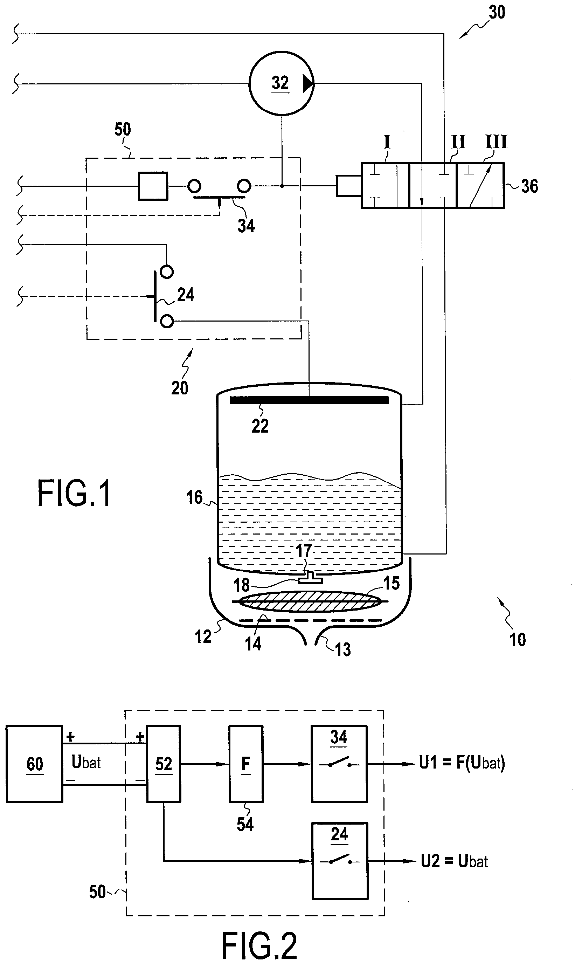

Un mode de mise en oeuvre de l'invention va maintenant être décrit avec la présentation d'un appareil de confection d'infusions 10, en relation avec les figures 1 et 2.

L'appareil 10 est en grande partie identique à l'appareil décrit dans le brevet français n°FR2966335. Pour cette raison, seule une description générale et schématique va être donnée, les détails de réalisation pouvant être retrouvés dans le brevet précité, tout au moins pour les caractéristiques de l'appareil 10 communes avec l'appareil divulgué par le brevet FR2966335.

Inversement, les caractéristiques de l'appareil 10 spécifiques à l'invention sont décrites dans la description qui suit.

L'appareil 10 comporte :

un porte-filtre 12 dans lequel est fixé un filtre 14,
un réservoir 16,
une soupape 18,
un système de chauffage 20, et
un système de mise sous pression d'air 30.

Sur la figure 1, l'appareil 10 est représenté en position d'infusion. Dans cette position, le porte-filtre 12 et le filtre 14 sont disposés en bas de l'appareil (représenté vers le bas de la figure 1).

Le réservoir 16 comporte une ouverture 17 disposée en bas du réservoir lorsque l'appareil 10 est en position d'infusion. La phase d'infusion suit une phase de remplissage et une phase de chauffage, pendant lesquelles l'appareil 10 est maintenu avec l'ouverture 17 disposée en haut du réservoir (c'est-à-dire à l'envers par rapport au sens de la figure 1). A cet égard, l'appareil 10 est parfois qualifié d'appareil à retournement en raison du retournement nécessaire entre la phase de remplissage et la phase d'infusion.

Lorsque la pression à l'intérieur du réservoir 16 reste en dessous d'une valeur limite permettant l'ouverture de la soupape 18, l'ouverture 17 est bouchée par la soupape 18 lorsque le porte-filtre 12 est vissé sur le réservoir 16. Inversement en l'absence du porte-filtre 12, la soupape 18 reste ouverte. Le réservoir 16 peut alors facilement être rempli, par exemple avec de l'eau. Pendant le remplissage du réservoir 16, une valve de sélection 36 met le haut du réservoir à l'air libre et ferme le fond du réservoir, de façon à ce que l'air puisse s'échapper du réservoir et que l'eau y demeure. Par rapport à la figure 1, la valve de sélection 36 est en position I pendant la phase de remplissage.

Pour confectionner une infusion à l'aide de l'appareil 10, après avoir rempli le réservoir d'eau 16, on dispose une dose de mouture 15 sur le filtre 14 du porte-filtre 12, et on ferme le porte-filtre 12 en le vissant sur le réservoir 16, ce qui a pour effet de fermer la soupape 18.

On déclenche alors le chauffage de l'eau contenue dans le réservoir en activant le système de chauffage 20.

Ce système de chauffage 20 comporte un réchauffeur 22, ici un résistor électrique chauffant, disposé à l'intérieur du réservoir 16. L'alimentation du réchauffeur est commandée par un interrupteur 24. Le chauffage se fait avec l'appareil 10 dans la même position que pour le remplissage, c'est à dire avec l'ouverture 17 vers le haut. De cette façon, le réchauffeur 22 est immergé et réchauffe l'eau contenue dans le réservoir. Pendant cette phase de chauffage de l'eau, la valve de sélection 36 est toujours dans la position I.

Une fois que l'eau a atteint la température désirée, par exemple 92°C +/- 3°C, le chauffage prend fin. Par exemple, un capteur de température (non représenté) arrête le chauffage et un signal sonore est émis lorsque la température souhaitée est atteinte.

On retourne alors l'appareil 10 pour le mettre en position d'infusion, dans le sens représenté sur la figure 1.

On procède ensuite à la mise en pression du réservoir 16.

Pour ce faire, le système 30 de mise sous pression d'air comporte un compresseur d'air 32, un double bouton-poussoir 34 et la valve de sélection 36. Une première pression du double bouton-poussoir 34 fait passer la valve de sélection 36 de la position I à la position II. De manière simultanée ou postérieure, le compresseur d'air 32 est mis en route. Comme indiqué sur la figure 1, le débit d'air provenant du compresseur d'air 32 entre alors dans le réservoir 16, ce qui augmente la pression dans le réservoir 16. Lorsque la différence de pression de part et d'autre du porte-filtre 12 est suffisamment importante pour vaincre la résistance du porte-filtre 12, de l'eau s'écoule du réservoir 16 à travers la dose de mouture 15 et le filtre 14, pour sortir par la buse 13 du porte-filtre 12.

De préférence, le porte-filtre 12 et le filtre 14 sont adaptés au type de mouture que l'on y dispose, par exemple des dosettes ou des capsules de café.

La résistance qu'offre le porte-filtre 12, avec le filtre 14 et la mouture 15, au passage de l'eau, c'est-à-dire la valeur de la perte de charge, dépend uniquement du couple filtre/dose de mouture utilisé.

Quel que soit le type de dose de mouture utilisé, le porte-filtre 12 de l'appareil et le système 30 de mise sous pression d'air sont agencés de telle sorte que la somme de la perte de charge du liquide à travers le filtre 12 et de la perte de charge à travers la dose de mouture 15 soit telle que le débit de sortie du liquide hors de l'appareil compense sensiblement le débit d'air entrant dans le réservoir, et que la pression dans le réservoir s'établisse à une pression (ou plage de pression) adéquate pour la préparation de l'infusion voulue. Avantageusement, il n'y a pas de régulation du débit d'air injecté dans le réservoir : ce débit reste sensiblement constant pendant la confection de l'infusion.

La pression ou plage de pression adéquate pour la préparation de l'infusion voulue et devant régner dans le réservoir 16 pendant la confection de l'infusion dépend du type de mouture utilisé. De plus, la perte de charge à travers la dose de mouture dépend généralement du type et de la marque de dose de mouture.

Par suite, si l'appareil est prévu pour fonctionner avec plusieurs types de moutures et/ou plusieurs types de doses de mouture, l'appareil est généralement prévu avec plusieurs jeux de filtres et porte-filtres, chacun étant adapté à un type de dose de mouture.

Par exemple, pour une mouture de type « expresso » (par exemple des capsules rigides), on utilise un porte-filtre et un filtre agencés de telle sorte que la pression dans le réservoir 16 soit de 7 à 8 bars environ pendant la confection de l'infusion ; pour une mouture de type « café filtre » (par exemple des dosettes souples), on utilise un porte-filtre et un filtre agencés de telle sorte que la pression dans le réservoir soit d'environ 2 bars pendant cette opération.

Lorsque l'infusion est terminée, il reste encore de l'air sous pression dans le réservoir 16. Pour une dose de mouture 15 de type café filtre, du fait de la faible différence de pression entre l'intérieur et l'extérieur du réservoir 16, l'excédent d'air sort très rapidement par la buse 13 après l'infusion de la boisson. En revanche, pour une dose de mouture 15 de type expresso, le retour de la pression dans le réservoir à la valeur de la pression ambiante peut prendre plusieurs minutes si l'on attend la sortie de l'air pressurisé par la buse 13. Pour raccourcir ce délai et pour prévenir tout accident dû à la surpression dans le réservoir 16, l'appareil 10 comporte un système de purge.

Ainsi, dans le présent mode de réalisation, une deuxième pression sur le bouton-poussoir 34 arrête le compresseur 32 et fait passer la valve de sélection 36 de la position II à la position III. Dans cette position III, le haut du réservoir (représenté en haut sur la figure 1) est mis à l'air libre, ce qui effectue une purge du réservoir et arrête instantanément l'écoulement d'eau infusée par la buse 13. Des moyens de sécurité reliés à la valve de sélection 36 et au porte-filtre 12 peuvent en outre être prévus pour empêcher l'utilisateur, pour certains types de moutures nécessitant une haute pression d'infusion, de retirer le porte-filtre 12 avant d'avoir mis la valve de sélection 36 en position de purge III. A l'inverse, pour des appareils de confection d'infusions n'utilisant que des moutures infusées à basse pression, la valve de sélection 36 n'est pas nécessaire et peut être retirée.

La valve de sélection 36 représentée n'est qu'un exemple schématique illustrant les circulations d'air pendant les différentes phases. Le brevet français n°FR2966335 fournit un autre exemple de réalisation avec une valve de sélection à deux positions.

La figure 2 représente schématiquement un circuit d'alimentation électrique de l'appareil 10. Le circuit d'alimentation comprend en l'espèce une carte électronique 50 reliée à une source de courant 60 par l'intermédiaire de ses bornes 52. La source de courant 60 est une source de tension quelconque, externe à l'appareil 10 ; c'est ici une batterie de voiture délivrant une tension Ubat. Les interrupteurs 24, 34 déjà mentionnés sont disposés sur la carte électronique.

L'interrupteur 24 est relié directement aux bornes 52 de la carte électronique 50, de façon à fournir au réchauffeur 22 une tension de sortie U2 égale à la tension d'alimentation de l'appareil Ubat, fournie par la batterie 60.

A l'inverse, entre les bornes 52 et l'interrupteur 34 est disposé un régulateur de tension 54 pour réguler la tension d'alimentation du compresseur d'air 32. Ce régulateur de tension 54 possède une fonction de transfert F et renvoie une tension de sortie U1=F(Ubat) pour alimenter le compresseur d'air 32.

Dans le présent mode de réalisation, la fonction F a l'expression suivante :

$$F(\text{Ubat}) = \left\{ \begin{array}{ll} 10,5\ \text{V} & \text{si Ubat} > 10,5\ \text{V} \\ \text{Ubat} & \text{si } 9,5\ \text{V} \leq \text{Ubat} \leq 10,5\ \text{V} \\ 0 & \text{si Ubat} < 9,5\ \text{V} \end{array} \right.$$

Ainsi, le compresseur d'air 32 n'est jamais alimenté en dehors d'une plage de tension comprise entre 9,5 V et 10,5 V, quelle que soit la tension d'alimentation Ubat de l'appareil 10. Il n'est pas alimenté si la tension d'alimentation de l'appareil 10 est inférieure à 9,5 V.

Pour réaliser le régulateur de tension 54, on peut utiliser tout régulateur de tension apte à fournir en sortie une tension variant dans la plage prédéterminée choisie - en prenant en compte naturellement les caractéristiques de la source de tension prévue pour alimenter l'appareil.

Le régulateur de tension peut être par exemple un régulateur linéaire, notamment un régulateur série avec asservissement de la tension de sortie, conçu à partir d'un amplificateur opérationnel et d'un pont diviseur de tension, ou bien encore un régulateur en circuit intégré.

Bien que l'invention ait été présentée dans le cas particulier d'une alimentation sous une tension nominale de 12 V, l'invention est applicable quelle que soit la tension nominale d'alimentation, par exemple une tension de 24 V. Elle peut nécessiter dans ce cas une électronique de puissance plus importante, de sorte que le régulateur de tension inclue par exemple un convertisseur de tension et/ou un abaisseur de tension.

**Revendications**

1. Appareil de confection d'infusions (10) comportant un réservoir (16),
un emplacement pour dose de mouture pour infusion dans lequel une dose de mouture (15) pour infusion peut être placée, et
un compresseur d'air électrique (32), apte à mettre le réservoir (16) sous pression de manière à permettre la confection de l'infusion lorsqu'un liquide contenu dans le réservoir traverse la dose de mouture (15) et sort du réservoir sous l'effet de la pression ;
l'appareil **se caractérisant en ce que** le compresseur (32) a un débit de sortie proportionnel à une tension d'alimentation (U1) du compresseur, et **en ce qu'**il comporte en outre un régulateur de tension (54), apte à adapter une tension d'alimentation (Ubat) de l'appareil (10) de manière à alimenter le compresseur d'air (32) sous une tension (U1) incluse dans une plage prédéterminée.

2. Appareil de confection d'infusions (10) selon la revendication 1, dans lequel le régulateur de tension est agencé pour n'alimenter le compresseur d'air que lorsque la tension d'alimentation de l'appareil est supérieure à une valeur minimale prédéterminée.

3. Appareil de confection d'infusions (10) selon la revendication 1 ou 2, dans lequel le compresseur d'air (32) est prévu pour fonctionner sous une tension d'alimentation (U1) continue.

4. Appareil de confection d'infusions (10) selon l'une quelconque des revendications 1 à 3, comportant en outre un réchauffeur électrique (20), alimenté directement sous la tension d'alimentation (Ubat) de l'appareil sans adaptation de tension par le régulateur de tension (54).

5. Appareil de confection d'infusions (10) selon l'une quelconque des revendications 1 à 4, dans lequel la plage prédéterminée est incluse dans l'intervalle 9,5 V à 10,5 V.

6. Appareil de confection d'infusions (10) selon l'une quelconque des revendications 1 à 5, comportant en outre une valve commandable (36) de mise à l'air libre.

7. Appareil de confection d'infusions (10) selon l'une quelconque des revendications 1 à 6, dont le compresseur est prévu pour que, au moins à un instant pendant la confection d'au moins une infusion, la pression s'exerçant dans le réservoir (16) soit supérieure ou égale à 6 Bars.

8. Appareil de confection d'infusions (10) selon l'une quelconque des revendications 1 à 7, dont le régulateur de tension (54) est apte à adapter la tension d'alimentation (Ubat) de l'appareil (10) de manière à alimenter le compresseur d'air (32) sous la tension (U1) incluse dans une plage prédéterminée même si la tension d'alimentation (Ubat) de l'appareil (10) fluctue dans le temps.

**Patentansprüche**

1. Gerät zur Herstellung von Aufgussgetränken (10), umfassend
einen Behälter (16),
einen Platz für die Mahldosis für den Aufguss, in dem eine Mahldosis (15) für den Aufguss angeordnet werden kann, und
einen elektrischen Luftkompressor (32), der geeignet ist, den Behälter (16) derart unter Druck zu setzen, um die Herstellung des Aufgusses zu ermöglichen, wenn eine Flüssigkeit, die in dem Tank enthalten ist, die Mahldosis (15) durchquert und aus dem Tank unter der Einwirkung des Drucks austritt,
wobei das Gerät **dadurch gekennzeichnet ist, dass** der Kompressor (32) eine Austrittsrate aufweist, die proportional zu einer Versorgungsspannung (U1) des Kompressors ist, und dadurch, dass es ferner einen Spannungsregler (54) aufweist, der geeignet ist, eine Versorgungsspannung (Ubat) des Gerätes (10) derart anzupassen, um den Luftkompressor (32) mit einer Spannung (U1) zu versorgen, die in einem vorbestimmten Bereich enthalten ist.

2. Gerät zur Herstellung von Aufgussgetränken (10) nach Anspruch 1, wobei der Spannungsregler ausgebildet ist, um den Luftkompressor nur dann zu speisen, wenn die Versorgungsspannung des Gerätes größer als ein vorbestimmter Minimalwert ist.

3. Gerät zur Herstellung von Aufgussgetränken (10) nach Anspruch 1 oder 2, wobei der Luftkompressor (32) vorgesehen ist, um mit einer Versorgungsgleichspannung (U1) zu funktionieren.

4. Gerät zur Herstellung von Aufgussgetränken (10) nach einem der Ansprüche 1 bis 3, ferner umfassend einen elektrischen Heizer (20), der direkt mit der Versorgungsspannung (Ubat) des Gerätes ohne Spannungsanpassung durch den Spannungsregler (54) gespeist wird.

5. Gerät zur Herstellung von Aufgussgetränken (10) nach einem der Ansprüche 1 bis 4, wobei der vorbestimmte Bereich in dem Intervall von 9,5 V bis 10,5 V enthalten ist.

6. Gerät zur Herstellung von Aufgussgetränken (10) nach einem der Ansprüche 1 bis 5, ferner umfassend ein steuerbares Belüftungsventil (36).

7. Gerät zur Herstellung von Aufgussgetränken (10) nach einem der Ansprüche 1 bis 6, wobei der Kompressor vorgesehen ist, damit für mindestens einen Moment während der Herstellung von mindestens einem Aufguss der Druck, der in dem Behälter (16) ausgeübt wird, größer als oder gleich 6 bar ist.

8. Gerät zur Herstellung von Aufgussgetränken (10) nach einem der Ansprüche 1 bis 7, wobei der Spannungsregler (54) geeignet ist, die Versorgungsspannung (Ubat) des Gerätes (10) derart anzupassen, um den Luftkompressor (32) mit der Spannung (U1) zu speisen, die in dem vorbestimmten Bereich enthalten ist, selbst wenn die Versorgungsspannung (Ubat) des Gerätes (10) im Laufe der Zeit schwankt.

**Claims**

1. An apparatus (10) for brewing infusions, comprising
   a reservoir (16),
   a location for a grind dose for infusion wherein a grind dose (15) for infusion can be placed, and
   an electric air compressor (32) capable of placing the reservoir (16) under pressure so as to allow the brewing of the infusion when a liquid contained in the reservoir passes through the grind dose (15) and leaves the reservoir under the influence of the pressure;
   the apparatus being **characterized in that** the compressor (32) has an outlet flow rate proportional to a supply voltage (U1) of the compressor, and **in that** it further comprises a voltage regulator (54) capable of adapting a supply voltage (Ubat) of the apparatus (10) so as to feed the air compressor (32) with a voltage (U1) included in a predetermined range.

2. The apparatus (10) for brewing infusions according to claim 1, wherein the voltage regulator is arranged for supplying the air compressor only when the supply voltage of the apparatus is greater than a predetermined minimum value.

3. The apparatus (10) for brewing infusions according to claim 1 or 2, wherein the air compressor is provided to operate under a DC supply voltage (U1).

4. The apparatus (10) for brewing infusions according to any one of claims 1 to 3, further comprising an electric heater (20) supplied directly with the supply voltage (Ubat) of the apparatus without adaptation of the voltage by the voltage regulator (54).

5. The apparatus (10) for brewing infusions according to any one of claims 1 to 4, wherein the predetermined range is included in the interval 9.5 V to 10.5 V.

6. The apparatus (10) for brewing infusions according to any one of claims 1 to 5, further comprising a controllable venting valve (36).

7. The apparatus (10) for brewing infusions according to any one of claims 1 to 6, the compressor whereof is provided so that, at least at one instant during the brewing of at least one infusion, the pressure exerted in the reservoir (16) is greater than or equal to 6 Bars.

8. The apparatus (10) for brewing infusions according to any one of claims 1 to 7, the voltage regulator (54) whereof is capable of adapting the supply voltage (Ubat) of the apparatus (10) so as to feed the air compressor (32) under the voltage (U1) included in a predetermined range even if the supply voltage (Ubat) of the apparatus fluctuates in time.

30

32 ▶

50

I    II   III

36

34

24

22

FIG.1

16

17

18      15

12   14      13

10

FIG.2

60   Ubat   52   F   34   U1 = F(Ubat)

54

24   U2 = Ubat

50

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2966335
- WO 2005060800 A
- EP 2027798 A